# FASCICULE DE BREVET EUROPEEN

(11) **EP 2 532 140 B1**
(45) Date de publication et mention de la délivrance du brevet: **10.05.2017**
(21) Numéro de dépôt: 11706873.4
(22) Date de dépôt: 26.01.2011
(51) Int. Cl.: H04L 29/06, H04L 12/06

(54) **PROCÉDÉ D'IDENTIFICATION ET D'AUTHENTIFICATION D'UNE ÉTIQUETTE RADIO PAR UN LECTEUR**
VERFAHREN ZUR IDENTIFIKATION UND AUTHENTIFIKATION EINES RFID-TAGS DURCH EIN LESEGERÄT
METHOD FOR IDENTIFYING AND AUTHENTICATING AN RFID TAG BY A READER

(30) Priorité: 01.02.2010 FR 1050694
(43) Date de publication de la demande: 12.12.2012
(73) Titulaire: Orange, 75015 Paris (FR)
(72) Inventeur: ROBSHAW, Matthew, F-95220 Herblam (FR); GILBERT, Henri, F-91440 Bures Sur Yvette (FR)
(86) Numéro de dépôt international: PCT/FR2011/050146
(87) Numéro de publication internationale: WO 2011/092426

(56) Documents cités:
- Poschmann A; Robshaw M; Vater F; Paar C: "Lightweight Cryptography and RFID: Tackling the Hidden Overheads", , [Online] 2 décembre 2009 (2009-12-02), page 17 PP, XP002606214, ISBN: 978-3-642-14422-6 Extrait de l'Internet: URL:http://www.crypto.rub.de/imperia/md/co ntent/texte/publications/conferences/20091 218_cryptogps_icisc_2009.pdf> [extrait le 2010-10-20]
- EPCGLOBAL INC: "EPC Radio-Frequency Identity Protocols Class-1 Generation-2 UHF RFID Protocol for Communications at 860 MHz-960 MHz Version 1.2.0", INTERNET CITATION, [Online] 23 octobre 2008 (2008-10-23), pages 1-108, XP002606215, Extrait de l'Internet: URL:http://www.epcglobalinc.org/standards/ uhfc1g2/uhfc1g2_1_2_0-standard-20080511.pd f> [extrait le 2010-10-19] cité dans la demande
- MARC GIRAULT ET AL: "On the Fly Authentication and Signature Schemes Based on Groups of Unknown Order", JOURNAL OF CRYPTOLOGY, vol. 19, no. 4, 25 septembre 2006 (2006-09-25), pages 463-487, XP019440584, SPRINGER-VERLAG, NE ISSN: 1432-1378, DOI: 10.1007/S00145-006-0224-0 cité dans la demande

## Description

L'invention concerne une technique d'identification et d'authentification d'une étiquette radio par un lecteur radio.

L'invention trouve une application particulièrement intéressante dans le domaine de la radio-identification, de l'anglais "Radio Frequency Identification", ou "RFID".

La radio-identification est une technique utilisée pour stocker et récupérer des données à distance en utilisant des marqueurs appelés radio-étiquettes, ou étiquettes radio (on parle également de "tag RFID"). Une étiquette radio est un petit objet, tel qu'une étiquette auto-adhésive, qui peut être collée sur, ou incorporée dans des objets ou produits. Elle comprend une antenne associée à une puce électronique qui lui permet de recevoir et de répondre à des requêtes radio émises depuis un émetteur-récepteur appelé lecteur. On utilise par exemple les étiquettes radio pour identifier des personnes lorsque les étiquettes sont intégrées dans des passeports, dans des titres de transport ou dans des cartes de paiement, ou pour identifier des produits comme avec un code barre. Cette dernière application facilite la gestion d'un stock et permet un suivi de ce stock tout au long de la chaîne de distribution d'un produit. Aujourd'hui de nombreux secteurs d'activité, dont l'industrie pharmaceutique, la distribution, la mode et les bibliothèques mettent en place un système RFID pour le suivi d'objets. La technologie RFID est de plus en plus utilisée pour automatiser des processus manuels, authentifier, protéger les marchandises et permettre une visibilité en temps réel d'un stock de marchandises.

Parmi des mécanismes existants pour identifier une étiquette radio, il a été standardisé par le consortium EPCglobal (« EPC » pour « Electronic Product Code » en anglais) un protocole d'identification d'étiquette appelé habituellement mécanisme de « tag singulation » [EPCglobal : EPC Radio-Frequency Identity Protocols, Class-1 Generation-2 UHF RFID, Protocol for Communications at 860-960 MHz, version 1.2.0]. Le mécanisme d'identification est adapté pour gérer des collisions au niveau radio lorsque plusieurs étiquettes radio répondent en même temps à une requête d'un lecteur. Ainsi, il permet à un lecteur radio d'identifier successivement parmi un ensemble d'étiquettes, chaque étiquette, pour discuter ensuite, dans le cadre d'une application spécifique, avec une étiquette identifiée à la fois. Une telle application est par exemple une application d'authentification adaptée pour vérifier que l'étiquette identifiée est bien l'étiquette qu'elle prétend être. Ainsi, l'association de ces mécanismes d'identification et d'authentification permet d'assurer un suivi précis de produits dotés de telles étiquettes radio, et de lutter efficacement contre la contrefaçon en vérifiant à chaque étape de la chaîne de distribution d'un produit, l'authenticité et donc la provenance de ce produit.

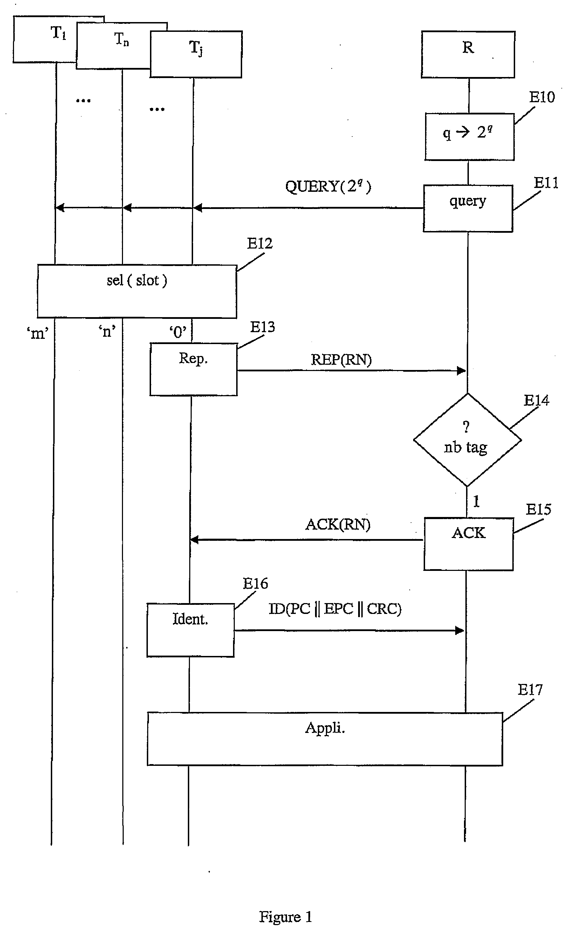

Le protocole d'identification défini par le consortium EPCglobal est décrit en relation avec la figure 1.

Dans une phase préalable (non représentée), un lecteur radio R décide d'une classe d'étiquette à interroger. Il peut s'agir par exemple de toutes les étiquettes issues d'un même fabricant. On suppose que plusieurs étiquettes T₁, ..., Tₙ répondant à ce critère sont à portée radio d'un lecteur radio R.

Dans une première étape E10 de paramétrage, le lecteur R fixe une valeur à un paramètre noté q qui détermine une plage de créneaux temporels pendant lesquels les étiquettes à portée radio du lecteur vont être sollicitées par le lecteur R. Le nombre de créneaux temporels de la plage est égal à 2*^{q}*.

Dans une étape E11 d'interrogation, le lecteur R émet sur la voie radio un message d'interrogation QUERY comprenant le nombre de créneaux temporels déterminé précédemment, en l'espèce 2*^{q}*. Dans une étape E12 de sélection, consécutive à l'émission par le lecteur R du message d'interrogation, les étiquettes T₁, ..., Tₙ à portée radio du lecteur R sélectionnent un créneau temporel dans la plage proposée. Ainsi, le créneau temporel sélectionné par chaque étiquette est un nombre compris entre 0 et 2*^{q}* -1. Ce créneau temporel, choisi par chaque étiquette de manière aléatoire, détermine un intervalle de temps particulier au cours duquel l'étiquette a la possibilité de répondre au lecteur, et éventuellement d'être isolée par le lecteur R au cours du protocole d'identification afin de dialoguer de manière privilégiée avec le lecteur dans le cadre d'une application particulière, par exemple une application d'authentification.

Une étiquette sollicitée au cours du créneau temporel qu'elle a sélectionné répond au lecteur R en envoyant une valeur aléatoire RN de 16 bits sélectionnée par l'étiquette. Le créneau 0 est représentatif du premier créneau associé au message d'interrogation QUERY du lecteur R envoyé au cours de l'étape E11. On suppose ici que seule l'étiquette Tⱼ a sélectionné 0 comme créneau temporel. L'étiquette Tⱼ est donc concernée par le message d'interrogation QUERY reçu du lecteur. L'étiquette Tⱼ envoie alors au lecteur R dans une étape E13 de réponse, un message de réponse REP qui comprend une valeur aléatoire RN choisie par l'étiquette Tⱼ.

Dans une étape E14 de test, le lecteur R détermine si zéro, une ou plusieurs étiquettes ont répondu au message d'interrogation QUERY qu'il a envoyé.

Ici, comme précisé ci-avant, on suppose que seule l'étiquette Tⱼ a répondu. Dans une étape E15 de réponse, le lecteur R répond à l'étiquette Tⱼ en envoyant un message d'accusé de réception ACK qui comprend la valeur aléatoire RN reçue de l'étiquette Tⱼ. Ainsi, l'étiquette Tⱼ a l'assurance que le lecteur R a correctement reçu son message de réponse.

Dans une étape E16 d'identification, l'étiquette Tⱼ envoie au lecteur R un message d'identification ID qui comprend une séquence d'informations propres à l'étiquette Tⱼ. Cette séquence comprend une chaîne de caractères, notée « PC » (de l'anglais « Product Code ») de 16 bits, qui identifie les capacités de l'étiquette, un code « EPC » (de l'anglais « Electronic Product Code ») de 64 à 128 bits qui identifie de manière unique l'étiquette Tⱼ, et un code correcteur « CRC » (pour « Cyclic-Redondancy Code ») de 16 bits, déterminé à partir du code PC et de l'identifiant EPC, et destiné à détecter des erreurs de transmission.

Dans un deuxième cas (non décrit sur la figure 1) où plusieurs étiquettes répondent au message d'interrogation QUERY envoyé par le lecteur R à l'étape E11, les étiquettes qui ont répondu se placent dans un état d'attente temporaire, ou état d'hibernation. Ce cas correspond à une collision des réponses des étiquettes qui ne peuvent alors être traitées par le lecteur R. Le lecteur R envoie un nouveau message d'interrogation, noté habituellement QUERYREP qui comprend un créneau temporel suivant. Dans un troisième cas (non décrit sur la figure 1) où aucune étiquette n'a répondu au message d'interrogation QUERY, alors le lecteur R envoie le nouveau message d'interrogation QUERYREP qui comprend le créneau temporel suivant.

Une fois que tous les créneaux temporels de l'intervalle [0, 2^{q}-1] ont été traités, le lecteur peut réémettre un nouveau message d'interrogation QUERY pour tenter d'identifier les étiquettes qui n'ont pu l'être lors de l'envoi des précédents messages d'interrogation QUERY et QUERYREP.

En fin d'étape E16 d'identification, toutes les autres étiquettes T₁, ..., Tⱼ₋₁, Tⱼ₊₁, ..., Tₙ, sont dans un état d'attente, soit parce qu'elles sont entrées dans un état d'hibernation, soit parce qu'elles ne sont pas concernées par l'échange en cours. Le lecteur R peut alors dialoguer avec l'étiquette Tⱼ qu'il a identifiée, selon les besoins particuliers d'une application. Un tel dialogue est schématisé sur la figure 1 par un état E17 dédié à une application. Un exemple intéressant dans le cadre de la présente invention est une application d'authentification qui permet au lecteur R de s'assurer que l'étiquette Tⱼ qui s'est identifiée auprès de lui est bien celle qu'elle prétend être. On remarque qu'une telle authentification intervient après que l'étiquette se soit identifiée au cours du protocole d'identification décrit précédemment.

Plusieurs schémas d'authentification d'une étiquette auprès d'un lecteur radio existent. Par exemple, on connaît le schéma d'authentification "GPS" (ou "cryptoGPS"), du nom des inventeurs "Girault, Paillès, Poupard, et Stern" [M. Girault, G. Poupard and J. Stern. "On the Fly Authentication and Signature Schemes Based on Groups of Unknown Order. Journal of Cryptology, pages 463-488, volume 19, number 4, 2006]. Le schéma GPS est une technique d'authentification à clé publique. C'est un protocole de type "zero-knowledge" (ou "à divulgation nulle de connaissance") dont la sécurité repose sur la difficulté du logarithme discret dans un groupe. La mise en oeuvre de ce schéma peut reposer par exemple sur de la cryptographie à base de courbe elliptique.

Ce schéma est habituellement utilisé pour qu'un dispositif très peu puissant, en termes de mémoire ou/et de puissance de calcul, s'authentifie auprès d'un deuxième dispositif, plus puissant. Le protocole est tel que le coût de l'authentification pour le dispositif le moins puissant peut être énormément réduit au moyen d'une série d'optimisations. Par exemple, une optimisation du schéma GPS repose sur un mode dit "à coupons". Ce mode consiste à calculer antérieurement à une session d'authentification tout ce qui peut l'être, laissant un minimum d'opérations à effectuer pendant la session d'authentification proprement dite. Cela rend le protocole GPS très bien adapté pour les applications basées sur les étiquettes RFID.

Le document [Poschmann A; Robshaw M; Vater F; Paar C: "Lightweight Cryptography and RFID: Tackling the Hidden Overheads", 2 décembre 2009, pages 17, XP002606214,ISBN: 978-3-642-14422-6. Extrait de l'Internet:URL:http://www.crypto.rub.de/imperia/md/content/texte/ publications/conferences/20091218_cryptogps_icisc_2009.pdf], divulgue un exemple de la mise en oeuvre du schéma d'authentification cryptoGPS dans un circuit intégré propre à une application.

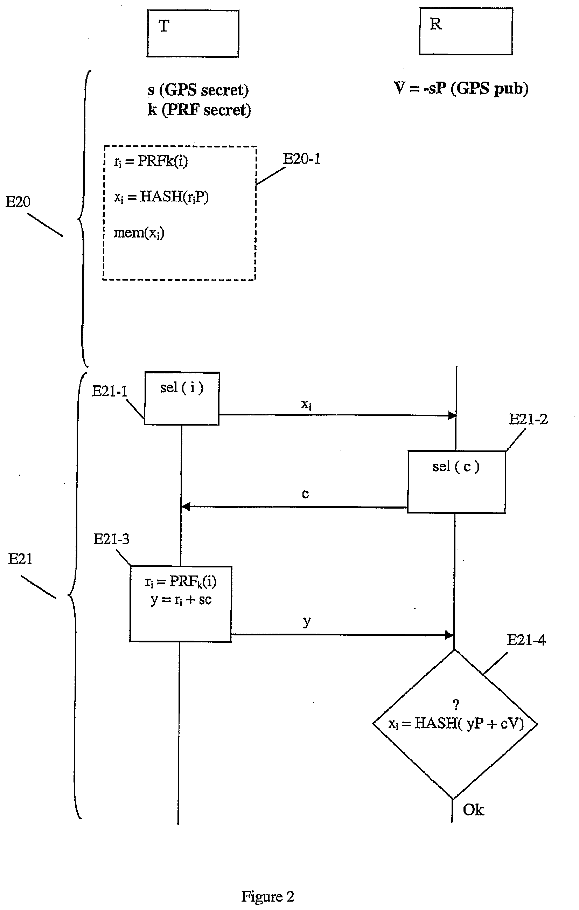

Un exemple de mise en oeuvre d'un schéma d'authentification GPS d'une étiquette radio auprès d'un lecteur, selon un état antérieur de la technique est décrit en relation avec la figure 2. L'exemple décrit ici est basé sur les courbes elliptiques ; il utilise un sous-groupe de points générés par un point P sur une courbe E. La mise en oeuvre décrite ici utilise des coupons d'authentification d'étiquette et une régénération d'aléas associés à chacun de ces coupons par l'étiquette, ce qui constitue une optimisation dans un schéma GPS de base. Dans cet exemple de réalisation, les calculs arithmétiques sur les courbes elliptiques sont exécutés sur le lecteur, alors que seulement des opérations arithmétiques de base sont exécutées par l'étiquette. On comprend que cet exemple est très intéressant en termes de performance et d'espace d'implémentation pour l'étiquette.

Selon ce schéma, un système d'authentification comprend au moins une étiquette T adaptée pour s'authentifier auprès d'un lecteur R lorsqu'elle passe à proximité du lecteur R.

Le schéma comprend de manière classique deux phases : une phase de configuration E20 au cours de laquelle des données d'authentification sont calculées ou/et fournies à l'étiquette T et au lecteur R, et une phase d'authentification E21 au cours de laquelle l'étiquette T s'authentifie auprès du lecteur R. La phase de configuration E20 peut n'être exécutée qu'une fois dans la vie du système. La phase d'authentification E21 est exécutée à chaque authentification de l'étiquette auprès du lecteur R.

Au cours de la phase de configuration E20, un couple de clés GPS (s, V) est généré. Le couple comprend une clé secrète s et une clé publique associée V. La clé secrète s, propre à l'étiquette T, est stockée dans l'étiquette T et n'est jamais extraite, ni transmise hors de l'étiquette T. La clé publique V est accessible par le lecteur R. Les clés s et V sont liées par exemple selon la formule suivante : *V* = *-sP,* où P est un point sur la courbe elliptique E connu du lecteur R. Dans une variante, *V* = *sP.* Autrement dit, la clé publique V est calculée selon l'addition sur la courbe elliptique en additionnant le point P s fois. Dans le mode de réalisation du schéma GPS décrit ici, parfois appelé mode "coupons réduits", une deuxième clé secrète k, appelée clé de régénération, est installée sur l'étiquette T. Elle est utilisée comme paramètre d'une fonction pseudo-aléatoire "PRF" (pour "Pseudo-Random Function") installée sur l'étiquette T.

Au cours de la phase de configuration E20, dans une étape E20-1 de configuration, il est pré-calculé un nombre prédéterminé n de valeurs, appelées habituellement coupons d'authentification de l'étiquette, et notées xᵢ, 1≤i≤n. On note xᵢ le coupon d'indice i. L'indice i est un index d'identification du coupon xᵢ. Pour calculer le coupon xᵢ, il est généré un aléa rᵢ au moyen de la fonction pseudo-aléatoire PRF paramétrée par la clé de régénération k et appliquée à l'index i (*rᵢ* = *PRFₖ* (*i*))*.* Les aléas rᵢ (donc, la sortie de la fonction PRF) ont une taille importante, par exemple 1100 bits. Le coupon xᵢ d'authentification de l'étiquette est alors calculé selon la formule suivante : *xᵢ = HASH*(*rᵢP*), où HASH est une fonction de hachage connue appliquée à l'addition sur la courbe elliptique du point P, rᵢ fois. Cette addition, et dans une moindre mesure l'évaluation de la fonction de hachage HASH sont des opérations coûteuses en termes de puissance de calcul. Ainsi, habituellement les coupons xᵢ sont pré-calculés par une entité de calcul (non représentée) du système d'authentification, différente de l'étiquette T et du lecteur R. Les coupons d'authentification de l'étiquette xᵢ sont ensuite stockés sur l'étiquette T, dans une mémoire non représentée de l'étiquette T, en vue d'être utilisés au cours d'authentifications auprès du lecteur R.

Au cours de la phase E21 d'authentification, dans une étape initiale E21-1 de sélection et d'envoi, il est sélectionné par l'étiquette T qui s'authentifie un coupon xᵢ d'index i. En fin d'étape E21-1, le coupon sélectionné xᵢ est envoyé au lecteur R.

Dans une étape E21-2 de sélection et d'envoi d'un défi, il est généré par le lecteur R un défi c. Le défi c est généré aléatoirement. En fin d'étape E21-2, le défi c est envoyé par le lecteur R à l'étiquette T.

Dans une étape E21-3 de régénération et de calcul, il est régénéré l'aléa rᵢ par l'étiquette T. A cette fin, la fonction pseudo-aléatoire PRF installée sur l'étiquette T et paramétrée par la clé secrète de régénération k est appliquée à l'index i qui identifie le coupon xᵢ. Il est connu que la fonction pseudo-aléatoire nécessite pour l'étiquette T peu de puissance de calcul. Il est ensuite calculé par l'étiquette T une réponse y au défi c au moyen de la formule suivante : *y = rᵢ* + *sc.* La réponse y est la somme de l'aléa rᵢ et du produit scalaire de la clé secrète s et du défi c. En fin d'étape E21-3, la réponse y est envoyée au lecteur R.

Dans une étape E21-4 de vérification, il est vérifié par le lecteur R que le coupon xᵢ reçu de l'étiquette en fin d'étape E21-1 est égal à une valeur obtenue en appliquant la fonction de hachage HASH à l'addition sur la courbe elliptique du point P y fois, et de l'addition c fois de la clé publique V, autrement dit à : *HASH*(*yP* + c*V*).

Si la vérification est positive (branche Ok sur la figure 2), alors l'étiquette T s'est correctement authentifiée auprès du lecteur R.

La fonction HASH est par exemple la fonction SHA-1 ("Secure Hash Algorithm").

On remarque que lorsqu'une authentification d'étiquette conforme au schéma décrit en relation avec la figure 2 est mise en oeuvre, celle-ci intervient nécessairement après que le lecteur a isolé une étiquette particulière au cours du protocole d'identification décrit en relation avec la figure 1. La mise en oeuvre successivement du protocole d'identification puis du protocole d'authentification nécessite donc autant de messages que ceux échangés au cours des deux protocoles, et autant de données transportées que celles échangées entre les entités impliquées au cours des deux protocoles.

L'invention vient améliorer la situation en proposant un procédé d'identification et d'authentification d'une étiquette radio mis en oeuvre par un lecteur radio, ladite étiquette appartenant à un ensemble d'étiquettes à portée radio du lecteur et ayant sélectionné un créneau temporel parmi un ensemble de créneaux disponibles, le procédé comprenant une étape de :
- envoi par le lecteur, durant le créneau temporel sélectionné, par le lecteur, d'un message d'interrogation,
- réception de l'étiquette ayant sélectionné le créneau temporel d'un message de réponse au message d'interrogation, ledit message de réponse comprenant une valeur aléatoire choisie par l'étiquette,
l'étiquette mémorisant des coupons d'authentification, la réponse de l'étiquette reçue par le lecteur durant le créneau temporel contient une valeur, fonction de l'un desdits coupons, en tant que valeur aléatoire choisie par l'étiquette.

Le procédé d'identification et d'authentification selon l'invention permet de mutualiser des étapes initialement distinctes et mises en oeuvre dans des protocoles distincts d'identification et d'authentification d'une étiquette radio. Selon l'invention, une valeur fonction d'un coupon d'authentification remplace la valeur aléatoire habituellement transmise au lecteur par l'étiquette lorsque celle-ci répond au message d'interrogation du lecteur relatif au créneau temporel sélectionné par l'étiquette, au cours du protocole d'identification. Ainsi, un seul message est envoyé par l'étiquette au lecteur pour répondre à la sollicitation du lecteur annonçant le créneau temporel sélectionné par l'étiquette et pour s'authentifier. On rappelle que, dans l'art antérieur, deux messages étaient envoyés : un premier message propre au protocole d'identification et contenant un aléa de 16 bits, et un deuxième message propre au protocole d'authentification et contenant une valeur fonction d'un coupon d'authentification de nature également aléatoire. Avec le procédé de l'invention, la valeur fonction du coupon d'authentification sert à la fois à identifier et à authentifier l'étiquette. Dans un exemple de réalisation, cette valeur est le coupon lui-même. Le procédé selon l'invention permet de minimiser le nombre de messages échangés lors d'une identification et d'une authentification d'étiquette.

Dans un exemple de réalisation le procédé comprend en outre une étape de :
- envoi par le lecteur à ladite étiquette d'un message d'accusé de réception établi en fonction de la valeur aléatoire, le message d'accusé de réception comprenant un défi choisi par le lecteur, et
- réception en provenance de l'étiquette d'un message d'identification comprenant des informations d'identification.

Le message d'accusé de réception, habituellement transmis par le lecteur à l'étiquette pour que l'étiquette soit assurée que le lecteur a correctement reçu sa réponse, est utilisé également pour transmettre à l'étiquette un défi c. Le défi est classiquement envoyé durant une authentification. Une fois encore, un seul message est utilisé pour transmettre à l'étiquette deux informations habituellement traitées séparément au cours d'une identification et au cours d'une authentification. Une fois encore, le nombre de messages échangés entre le lecteur et l'étiquette est réduit, par rapport au nombre de messages échangés lorsque les protocoles d'identification et d'authentification s'enchaînent selon l'état antérieur de la technique.

Dans un exemple de réalisation, le message d'identification comprend une réponse d'authentification calculée à partir du défi et d'un secret propre à l'étiquette, et le procédé comprend une étape de :
- vérification par le lecteur que la valeur aléatoire contenue dans le message de réponse reçue de l'étiquette est égale à une valeur calculée à partir de la réponse d'authentification et du défi, l'authentification de l'étiquette étant réussie lorsque la vérification est positive.

Dans ce mode de réalisation, l'étiquette est authentifiée en même temps qu'elle est identifiée. Aucune phase supplémentaire d'authentification n'est alors nécessaire. On remarque qu'avec le procédé de l'invention, on réduit de moitié le nombre de messages échangés entre l'étiquette et le lecteur. De même, on réduit également la quantité de données échangée entre l'étiquette et le lecteur. En effet, le coupon d'authentification (ou une valeur, fonction de ce coupon), de nature aléatoire, envoyé habituellement au cours d'un protocole d'authentification et la valeur aléatoire choisie par l'étiquette, envoyée habituellement au cours du protocole d'identification sont une seule et même donnée. Cette donnée, transmise une fois, joue le rôle de valeur aléatoire au sens du protocole d'identification, et le rôle d'engagement au sens du protocole d'authentification.

On remarque qu'avec le procédé selon l'invention et les optimisations qu'il apporte en termes de nombre de messages et de quantité de données échangés, le temps nécessaire à une identification et une authentification est réduit par rapport à l'état antérieur de la technique.

Dans un exemple de réalisation, le message d'accusé de réception comprend une donnée, fonction du coupon d'authentification.

Dans une autre variante de réalisation, lequel le message de réponse de l'étiquette comprenant en outre un deuxième aléa, l'accusé de réception envoyé par le lecteur est établi aussi en fonction du deuxième aléa.

Ce mode de réalisation permet une authentification mutuelle du lecteur et de l'étiquette. En effet, l'envoi d'un deuxième aléa par l'étiquette, en tant que défi au lecteur contribue à l'authentification du lecteur par l'étiquette. Une réponse à ce défi est alors calculée par le lecteur puis transmise à l'étiquette dans le message suivant. On remarque que le nombre de messages échangés reste inchangé, que ce soit pour une identification et une authentification de l'étiquette ou une authentification de l'étiquette et du lecteur.

L'invention concerne aussi un procédé d'authentification d'une étiquette auprès d'un lecteur radio, l'étiquette étant à portée radio du lecteur, ladite étiquette ayant sélectionné un créneau temporel parmi un ensemble de créneaux disponibles, le procédé comprenant une étape de :
- réception du lecteur durant le créneau temporel sélectionné d'un message d'interrogation,
- envoi au lecteur d'un message de réponse au message d'interrogation, ledit message de réponse comprenant une valeur aléatoire choisie par l'étiquette,
l'étiquette mémorisant des coupons d'authentification, la réponse de l'étiquette envoyée au lecteur contient une valeur, fonction de l'un desdits coupons, en tant que valeur aléatoire choisie par l'étiquette.

Dans une variante de réalisation, le procédé d'authentification d'une étiquette comprend en outre une étape de :
- réception du lecteur d'un message d'accusé de réception établi en fonction de la valeur aléatoire, le message d'accusé de réception comprenant un défi (c) choisi par le lecteur, et
- envoi au lecteur d'un message d'identification comprenant des informations d'identification.

Dans une variante de réalisation du procédé d'authentification d'une étiquette, le message d'identification envoyé au lecteur comprend en outre une réponse d'authentification calculée à partir du défi et d'un secret propre à l'étiquette.

L'invention porte également sur un lecteur adapté pour identifier et authentifier une étiquette radio, ladite étiquette appartenant à un ensemble d'étiquettes à portée radio du lecteur et ayant sélectionné un créneau temporel parmi un ensemble de créneaux disponibles, l'étiquette mémorisant des coupons d'authentification, le lecteur comprenant :
- des premiers moyens d'envoi, agencés pour envoyer un message d'interrogation durant le créneau temporel sélectionné,
- des premiers moyens de réception, agencés pour recevoir de l'étiquette ayant sélectionné le créneau temporel un message de réponse au message d'interrogation ledit message de réponse comprenant une valeur fonction d'un desdits coupons d'authentification en tant que valeur aléatoire choisie par l'étiquette,
- des moyens de vérification, agencés pour vérifier combien les premiers moyens de réception ont reçu de messages de réponse pendant le créneau temporel sélectionné.

L'invention concerne aussi un étiquette radio adaptée pour être identifiée et authentifiée par un lecteur radio, l'étiquette comprenant :
- des moyens de mémorisation de coupons d'authentification,
- des moyens de sélection, agencés pour sélectionner un créneau temporel parmi un ensemble de créneaux disponibles,
- des premiers moyens de réception, agencés pour recevoir du lecteur, durant le créneau temporel sélectionné par les moyens de sélection, un message d'interrogation,
- des premiers moyens d'envoi, agencés pour envoyer au lecteur un message de réponse, au message d'interrogation, comprenant un desdits coupons d'authentification en tant que valeur aléatoire choisie par l'étiquette.

L'invention porte aussi sur un système d'authentification radio comprenant :
- un lecteur radio selon la revendication l'invention, et
- au moins une étiquette radio selon l'invention.

L'invention concerne aussi un programme d'ordinateur destiné à être installé dans une mémoire d'un lecteur radio, comprenant des instructions pour la mise en oeuvre des étapes du procédé d'identification et d'authentification d'une étiquette radio par un lecteur selon l'invention qui sont exécutées par le lecteur, lorsque le programme est exécuté par un processeur.

L'invention concerne aussi un support de données sur lequel est enregistré le programme d'ordinateur selon l'invention.

De nombreux détails et avantages de l'invention seront mieux compris à la lecture de la description d'un mode particulier de réalisation, en référence aux schémas annexés donnés à titre non limitatif et dans lesquels :
- la figure 1 (déjà commentée) décrit les étapes d'un protocole d'identification d'une étiquette radio par un lecteur radio, selon un état antérieur de la technique ;
- la figure 2 (déjà commentée) représente les étapes d'un schéma d'authentification connu d'une étiquette auprès d'un lecteur, en l'espèce le schéma GPS, selon un état antérieur de la technique ;
- la figure 3 décrit les étapes d'une procédé d'identification et d'authentification d'une étiquette radio par un lecteur, selon un exemple de réalisation de l'invention ;
- la figure 4 représente un exemple de réalisation d'un lecteur radio agencé pour identifier et authentifier une étiquette radio représentée figure 5 ;
- la figure 5 représente un exemple de réalisation d'une étiquette agencée pour s'identifier et s'authentifier auprès d'un lecteur radio selon l'invention.

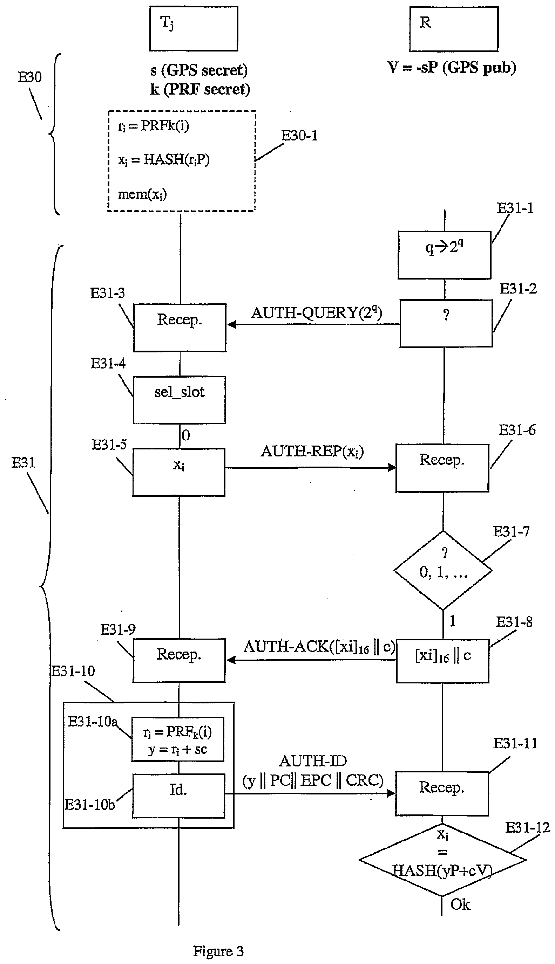

Les étapes d'un procédé d'identification et d'authentification d'une étiquette radio par un lecteur, selon un exemple de réalisation de l'invention, vont maintenant être décrites en relation avec la figure 3.

On suppose que plusieurs étiquettes T₁, ..., Tₙ sont à portée radio d'un lecteur radio R. Pour des raisons de lisibilité, seule l'étiquette Tⱼ est représentée sur la figure 3.

Le procédé selon l'invention comprend deux phases : une phase de configuration E30 au cours de laquelle des données d'authentification sont calculées ou/et fournies aux étiquettes T₁, ..., Tₙ et au lecteur R, et une phase opérationnelle E31 au cours de laquelle il est procédé par le lecteur R à l'identification et l'authentification d'une étiquette Tⱼ. La phase de configuration E30 peut n'être exécutée qu'une fois dans la vie du système. La phase opérationnelle E31 est exécutée à chaque identification et authentification d'une étiquette par le lecteur R. Ici, seule la phase de configuration de l'étiquette Tⱼ est décrite. On comprend qu'une telle phase de configuration est également réalisée pour chaque étiquette T₁, ..., Tⱼ₋₁, T_{j+1,}..., Tₙ.

Au cours de la phase de configuration E30, un couple de clés GPS (s, V) propre à l'étiquette Tⱼ est généré. Le couple comprend une clé secrète s et une clé publique associée V. La clé secrète s, propre à l'étiquette Tⱼ, est stockée dans l'étiquette Tⱼ de manière à ne jamais être extraite, ni transmise hors de l'étiquette Tⱼ. La clé publique V est accessible par le lecteur R. Les clés s et V sont liées par exemple selon la formule suivante : *V* = *-sP,* où P est un point sur une courbe elliptique E, connu du lecteur R. Dans une variante, *V* = *sP .* Autrement dit, la clé publique V est calculée en additionnant s fois le point P sur la courbe elliptique E. Dans le mode de réalisation du schéma GPS décrit ici, parfois appelé mode "coupons réduits", une deuxième clé secrète k, appelée clé de régénération, est installée sur l'étiquette Tᵢ. Elle est utilisée comme paramètre d'une fonction pseudo-aléatoire "PRF" (pour "Pseudo-Random Function") installée sur l'étiquette Tⱼ.

Au cours de la phase de configuration E30, dans une étape E30-1 de configuration, il est pré-calculé un nombre prédéterminé m de valeurs, appelées habituellement coupons d'authentification de l'étiquette, et notées xⱼ,1≤i≤m. On note xᵢ le coupon d'indice i. L'indice i est un index d'identification du coupon xᵢ. Pour calculer le coupon xᵢ, il est généré un aléa rᵢ au moyen de la fonction pseudo-aléatoire PRF paramétrée par la clé de régénération k et appliquée à l'index i (*rᵢ* = *PRFₖ*(*i*))*.* Les aléas rᵢ (donc, la sortie de la fonction PRF) ont une taille importante, par exemple 1100 bits. Le coupon xᵢ d'authentification de l'étiquette est alors calculé selon la formule suivante : *xᵢ = HASH*(*rᵢP*)*,* où HASH est une fonction de hachage connue appliquée à l'addition rᵢ fois du point P sur la courbe elliptique. Cette addition et, dans une moindre mesure, l'évaluation de la fonction de hachage HASH sont des opérations coûteuses en termes de puissance de calcul. Ainsi, habituellement les coupons xᵢ sont pré-calculés par une entité de calcul (non représentée) du système, différente de l'étiquette Tⱼ et du lecteur R. Les coupons d'authentification xᵢ de l'étiquette sont ensuite stockés sur l'étiquette Tⱼ, dans une mémoire non représentée, en vue d'être utilisés au cours d'identifications et d'authentifications auprès du lecteur R.

Dans une étape préalable (non représentée) de la phase opérationnelle E31, le lecteur R décide d'une classe d'étiquette à interroger. Il peut s'agir par exemple de toutes les étiquettes issues d'un même fabricant.

Dans une première étape E31-1 de paramétrage de la phase opérationnelle E31, le lecteur R fixe une valeur à un paramètre noté q qui détermine une plage de créneaux temporels pendant lesquels les étiquettes à portée radio du lecteur vont être sollicitées par le lecteur R. Le nombre de créneaux temporels de la plage est égal à 2^{q}.

Dans une étape E31-2 d'interrogation, le lecteur R émet un message d'interrogation AUTH-QUERY précisant la série de créneaux temporels déterminée précédemment. Le message d'interrogation est reçu par les étiquettes, notamment l'étiquette Tⱼ, dans une étape E31-3 de réception. Dans une étape E31-4 de sélection, consécutive à la réception par l'étiquette du message d'interrogation AUTH-QUERY, les étiquettes T₁, ..., Tₙ à portée radio du lecteur R sélectionnent chacune, de manière aléatoire, un créneau temporel dans la plage proposée. Ainsi, le créneau temporel sélectionné par chaque étiquette est identifié par un nombre compris entre 0 et 2^{q}-1. Après sélection de leur créneau temporel, les étiquettes attendent chacune une sollicitation du lecteur R relative à ce créneau temporel.

Dans l'exemple particulier décrit ici, on suppose que :
- l'étiquette Tⱼ sélectionne, au cours de l'étape E31-4 de sélection, le créneau temporel 0, lequel est représentatif du premier créneau de la série de créneaux déterminée par le lecteur R ;
- le premier message d'interrogation AUTH-QUERY du lecteur R envoyé au cours de l'étape E31-2 annonce le créneau 0 ;
- seule l'étiquette Tⱼ a sélectionné le créneau temporel 0.

Dans une étape E31-5 de réponse, l'étiquette Tⱼ envoie au lecteur R un message de réponse AUTH-REP contenant une valeur fonction d'un coupon d'authentification xᵢ. Dans l'exemple particulier décrit ici, cette valeur est égale au coupon d'authentification xi lui-même. On rappelle que le coupon xᵢ a été calculé selon la formule suivante : *xᵢ* = *HASH*(*rᵢP*), où P est un point sur la courbe elliptique E et rᵢ un aléa. Le coupon d'authentification xᵢ joue le rôle de valeur aléatoire choisie par l'étiquette Tⱼ et insérée par l'étiquette Tⱼ dans le message de réponse AUTH-REP. Le message de réponse AUTH-REP est reçu par le lecteur R dans une étape E31-6 de réception.

Dans une étape E31-7 de test, le lecteur R détermine combien d'étiquette(s) ont répondu au message d'interrogation AUTH-QUERY. Ici, comme précisé ci-avant, on suppose que seule l'étiquette Tᵢ a répondu.

Dans une étape E31-8 de réponse, le lecteur R répond à l'étiquette Tⱼ en envoyant un message d'accusé de réception AUTH-ACK pour la réponse reçue. Le message d'accusé de réception comprend une donnée fonction du coupon d'authentification xᵢ reçu, ainsi qu'un défi c. Le défi est, de manière classique, une valeur aléatoire choisie par le lecteur R. La donnée est par exemple une partie du coupon et correspond dans cet exemple aux 16 bits les moins significatifs du coupon xᵢ; elle est notée [xᵢ]₁₆. Par exemple, la partie de xᵢ envoyée, [xᵢ]₁₆ et le défi c sont concaténés. Ainsi, le message d'accusé de réception AUTH-ACK comprend une valeur concaténée notée [xᵢ]₁₆ ∥ c. Dans une étape E31-9 de réception et de contrôle, le message d'accusé de réception est reçu par l'étiquette Tⱼ qui contrôle que la valeur [xᵢ]₁₆ ∥c reçue est bien associée au coupon xᵢ qu'elle a envoyé. Etant donné le caractère aléatoire d'un coupon d'authentification, lorsque l'étiquette Tⱼ compare la partie du coupon [xᵢ]₁₆ reçue dans l'accusé de réception aux 16 bits les moins significatifs du coupon xᵢ envoyé et que ces valeurs sont égales, alors l'étiquette est assurée que le lecteur R a correctement reçu son message de réponse. On remarque que le défi c, envoyé dans le message d'accusé de réception, est une donnée destinée à l'authentification de l'étiquette Tⱼ par le lecteur R.

Dans une étape E31-10 d'identification et d'authentification, l'étiquette Tⱼ calcule une réponse d'authentification au défi c reçu du lecteur, puis envoie la réponse d'authentification ainsi que des informations d'identification propres à l'étiquette Tⱼ. Ainsi, dans une sous-étape E31-10a de régénération et de calcul, il est régénéré l'aléa rᵢ par l'étiquette Tⱼ. A cette fin, la fonction pseudo-aléatoire PRF installée sur l'étiquette Tⱼ et paramétrée par la clé secrète de régénération k est appliquée à l'index i qui identifie le coupon xᵢ. Il est connu que la fonction pseudo-aléatoire nécessite pour l'étiquette Tᵢ peu de puissance de calcul. Il est ensuite calculé par l'étiquette Tⱼ une réponse y au défi c au moyen de la formule suivante : *y = rᵢ* + *sc.* La réponse y est la somme de l'aléa rᵢ et du produit scalaire de la clé secrète s et du défi c. Puis, dans une sous-étape E31-10b d'envoi, l'étiquette Tⱼ envoie au lecteur un message d'identification AUTH-ID qui comprend la réponse d'authentification y, ainsi qu'une séquence d'identification propre à l'étiquette Tⱼ. La séquence propre à l'étiquette comprend une chaîne de caractères notée « PC » (de l'anglais « Product Code ») de 16 bits, qui identifie les capacités de l'étiquette, un code « EPC » (de l'anglais « Electronic Product Code ») de 64 à 128 bits bits qui identifie de manière unique l'étiquette, et un code correcteur « CRC » (pour « Cyclic-Redondancy Code ») de 16 bits, déterminé à partir du code PC et de l'identifiant EPC, et destiné à détecter des erreurs de transmission. Le message d'identification AUTH-ID est obtenu par concaténation de toutes ces données y, PC, EPC et CRC, le résultat de cette concaténation étant noté y ∥ PC ∥EPC ∥CRC. Le message d'identification est reçu par le lecteur dans une étape E31-11 de réception.

Dans une étape E31-12 de vérification, il est vérifié par le lecteur R que le coupon reçu de l'étiquette Tᵢ au cours de l'étape E31-6 de réception est égal à une valeur obtenue en appliquant la fonction de hachage HASH en additionnant le point P additionné y fois selon l'addition sur la courbe elliptique, et l'addition de la clé publique V c fois. Autrement dit, le coupon reçu est comparé à *HASH*(*yP+cV*)*.* Si la vérification est positive (branche Ok sur le figure 3), alors l'étiquette Tⱼ s'est correctement authentifiée auprès du lecteur R.

Ainsi, si la vérification effectuée à l'étape E31-12 est positive, le lecteur R détient les données d'identification propres à l'étiquette Tⱼ et a en outre authentifié l'étiquette Tᵢ.

En fin d'étape E31-12, toutes les étiquettes radio autres que l'étiquette Tⱼ sont dans un état d'attente car, dans cet exemple, le créneau temporel qu'elles ont sélectionné n'a pas fait l'objet d'un message d'interrogation du lecteur R.

La fonction HASH est par exemple la fonction SHA-1 ("Secure Hash Algorithm").

Des échanges peuvent encore avoir lieu entre l'étiquette Tⱼ et le lecteur R. Ces échanges (non décrits ici) sont alors spécifiques à une application. Une fois les échanges entre l'étiquette Tⱼ et le lecteur R terminés, l'étiquette Tᵢ entre en état d'hibernation. Le lecteur, s'il souhaite interagir avec d'autres étiquettes de l'ensemble envoie un nouveau message d'interrogation AUTH-QUERYREP qui précise un créneau temporel suivant. Cette étape d'interrogation est comparable à l'étape E31-2 d'interrogation.

Pour un créneau temporel donné, et dans le cas où une seule étiquette répond au lecteur, les étapes E31-3 à E31-12 sont exécutées comme précédemment décrites.

Dans le cas (non décrit sur la figure 1) où plusieurs étiquettes répondent à un message d'interrogation AUTH-QUERY envoyé par le lecteur R lors de l'étape E31-2, (ou à un message AUTH-QUERYREP envoyé pour un créneau temporel suivant), les étiquettes qui ont répondu se placent dans un état d'attente temporaire, ou état d'hibernation. Ce cas correspond à une collision des réponses des étiquettes qui ne peuvent alors être traitées par le lecteur R.

Dans le cas (non décrit sur la figure 1) où aucune étiquette n'a répondu à un message d'interrogation AUTH-QUERY envoyé par le lecteur R lors de l'étape E31-2, alors le lecteur R envoie un nouveau message d'interrogation AUTH-QUERYREP qui indique le créneau temporel suivant.

Une fois tous les créneaux de la plage [0, 2^{q}-1] traités par le lecteur R, le lecteur peut émettre un nouveau message d'interrogation AUTH-QUERY, afin d'identifier et d'authentifier les étiquettes qui ne l'ont pas été lors des échanges précédents.

Comme précisé précédemment, on suppose que l'étiquette Tⱼ a sélectionné le créneau O. Bien entendu, l'étiquette peut avoir sélectionné n'importe quel créneau. Le cas échéant, elle attend de recevoir du lecteur R un nouveau message d'interrogation AUTH-QUERYREP qui précise le créneau qu'elle a sélectionné, pour envoyer en réponse un de ses coupons d'authentification, conformément à l'étape E31-5 de réponse décrite précédemment.

Dans la variante de cryptoGPS décrite ici, les valeurs rᵢ, utilisées pour calculer les coupons d'authentification selon la formule xᵢ = HASH(rᵢP) , sont régénérées par l'étiquette Tⱼ au moment de l'utilisation effective du coupon, en l'espèce ici au cours de la sous-étape 31-10a. Ainsi, seul le coupon xᵢ a besoin d'être mémorisé par l'étiquette Tⱼ. Cela est intéressant lorsque les étiquettes ont une mémoire de stockage limitée.

L'invention n'est pas limitée à la variante de cryptoGPS décrite. D'autres variantes de ce schéma existent. Ainsi, dans un autre exemple de mise en oeuvre du schéma GPS (non représenté) qui constitue une optimisation du schéma, les coupons d'authentification de l'étiquette xᵢ sont pré-calculés par une entité de calcul différente du lecteur R et de l'étiquette Tⱼ, et stockés sur le lecteur, ou délivrés au lecteur par l'entité de calcul à travers un canal de communication. Dans ce cas, le message de réponse envoyé par l'étiquette Tⱼ au cours de l'étape E31-5 de réponse comprend une valeur, fonction d'un aléa RN choisi par l'étiquette et d'un index de coupon CID qui indique au lecteur quel coupon xᵢ est utilisé par l'étiquette au cours des échanges courants. Ainsi, le message de réponse dépend du coupon dans le sens où un index de ce coupon est précisé, et d'autre part, il conserve un caractère aléatoire puisque l'aléa RN est utilisé pour calculer la réponse de l'étiquette. La valeur transmise dans la réponse est notée g(RN, CID). La fonction g est par exemple la concaténation de l'aléa RN et de l'index de coupon CID.

Habituellement, après la phase de configuration E30, la clé secrète de régénération k n'est présente que sur l'étiquette, elle ne quitte jamais l'étiquette et n'est pas destinée à être partagée avec une autre entité, hormis éventuellement l'entité de calcul apte à pré-calculer les coupons d'authentification de l'étiquette. La clé secrète de régénération k est différente de la clé secrète s. Cependant, dans un exemple de mise en oeuvre du schéma GPS, elle peut être dérivée de la clé secrète s.

Dans une autre variante du schéma d'authentification cryptoGPS, les coupons d'authentification qui sont stockés sur l'étiquette Tⱼ et transmis au lecteur R sont des couples (rᵢ, xᵢ), ou « coupons non réduits ». Dans cette variante, les aléas sont donc stockés dans l'étiquette et ne sont pas régénérés, comme c'est le cas dans le schéma décrit précédemment. On remarque que cette variante est moins intéressante en termes d'occupation de l'espace mémoire de étiquette Tⱼ, puisqu'elle nécessite que l'étiquette stocke plus d'informations.

Dans un autre exemple de réalisation du schéma cryptoGPS, les coupons sont également des couples (rᵢ, xᵢ), avec xᵢ =HASH(rᵢP). La valeur rᵢ est un aléa, et P est un point sur la courbe elliptique E. La fonction HASH représente par exemple la fonction cryptographique de hachage « SHA-1 ».

D'une manière générale, l'invention s'étend à tout protocole d'authentification basé sur les échanges entre une première entité appelée classiquement prouveur et une deuxième entité, classiquement appelée vérifieur d'un engagement d'authentification, d'un défi et d'une réponse d'authentification.

Dans un autre exemple de réalisation de l'invention, dans l'étape E31-5 de réponse, la valeur qui est transmise par l'étiquette et qui est fonction du coupon est obtenue en extrayant certains bits du coupon xᵢ. Par exemple, la valeur est obtenue en choisissant 16 bits du coupon xᵢ. Dans un autre exemple, la valeur est obtenue en choisissant une fraction du coupon, ladite fraction étant plus petite que le coupon xᵢ d'origine.

Dans un autre exemple de réalisation de l'invention, dans l'étape E31-5 de réponse, la valeur transmise par l'étiquette dans le message de réponse comprend un aléa choisi par l'étiquette et un coupon d'authentification xᵢ. Ainsi, avec un seul message, l'étiquette envoie le coupon d'authentification, classiquement envoyé au cours d'un protocole d'authentification tel que cryptoGPS, et un aléa, classiquement envoyé au cours du protocole d'identification.

Par ailleurs, l'invention n'est pas limitée à un message d'accusé de réception AUTH-ACK envoyé par le lecteur R qui comprend la concaténation des 16 bits les moins significatifs du coupon xᵢ et du défi c ([xᵢ]₁₆∥ c) (ou selon l'exemple décrit précédemment la concaténation de la valeur fonction du coupon, et du défi). Ainsi, dans un autre exemple de réalisation de l'invention, l'accusé de réception AUTH-ACK envoyé par le lecteur à l'étape E31-8 comprend une valeur résultante, fonction du coupon d'authentification reçu du lecteur R au cours de l'étape E31-6 et du défi c choisi par le lecteur. Ainsi, dans cet exemple le message d'accusé de réception AUTH-ACK comprend une valeur, notée h(xᵢ,c) correspondant à l'application d'une fonction h au coupon xᵢ et au défi c.

Dans un autre exemple de réalisation, une partie du message de réponse AUTH-REP envoyé par l'étiquette Tᵢ au cours de l'étape E31-5 correspond à un aléa c'. Cet aléa peut avantageusement être utilisé au cours d'une authentification du lecteur par l'étiquette, le procédé réalisant alors une authentification mutuelle de l'étiquette et du lecteur. Dans cet exemple, le lecteur R envoie dans le message d'accusé de réception AUTH-ACK une valeur fonction du coupon d'authentification xᵢ, du défi c et de l'aléa reçu de l'étiquette. La valeur transmise est notée h'(xᵢ, c, c').

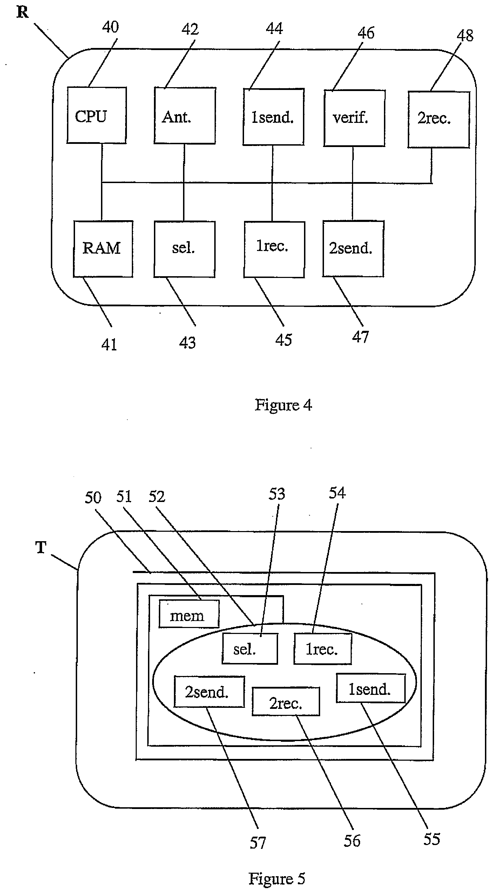

Un lecteur radio R selon une forme particulière de réalisation de l'invention va maintenant être décrit en relation avec la figure 4.

Le lecteur radio R est un dispositif actif, émetteur de radio fréquences qui active un ensemble d'étiquettes (non représentées sur la figure 4) qui passent à sa proximité en leur fournissant une énergie dont elles ont besoin. Le lecteur R selon l'invention est adapté pour dialoguer avec les étiquettes de l'ensemble afin d'identifier et d'authentifier une étiquette Tⱼ particulière de cet ensemble (non représentée sur la figure 4) au cours d'une séquence d'identification et d'authentification conforme aux étapes du procédé selon l'invention décrites précédemment. Chaque étiquette de l'ensemble mémorise des coupons d'authentification, notés xᵢ, qui lui sont propres.

Le lecteur R comprend plusieurs modules :
- une unité de traitement 40, ou "CPU" (de l'anglais "Control Processing Unit"),
- un ensemble de mémoires, dont une mémoire volatile 41, ou "RAM" (pour "Random Access Memory") utilisée pour exécuter des instructions de code, stocker des variables, etc.,
- une antenne 42, adaptée pour émettre et recevoir sur la voie radio,
- un module de sélection 43 d'un paramètre opérationnel q qui définit un ensemble de créneaux temporels durant lesquels le lecteur va envoyer des message d'interrogation aux étiquettes. Le nombre de créneaux temporels est défini à partir du paramètre opérationnel q ; il est égal à 2^{q}. Le module de sélection 43 est adapté pour mettre en oeuvre l'étape E31-1 du procédé d'identification et d'authentification décrit en relation avec la figure 3,
- un premier module qui, couplé avec l'antenne 42, constitue un premier module d'envoi 44, agencé pour envoyer un message d'interrogation AUTH-QUERY ou AUTH-QUERYREP durant un créneau temporel. Ainsi, un message d'interrogation précise, selon sa nature, un créneau courant ou le nombre de créneaux temporels définis à partir du paramètre opérationnel. Il est convenu que le premier message, de type AUTH-QUERY transmet le nombre de créneaux (2^{q}) et est associé à une premier créneau temporel identifié par la valeur 0. Un message d'interrogation suivant, noté AUTH-QUERYREP transmet une valeur courante de créneau temporel. Le premier module d'envoi 44 est adapté pour mettre en oeuvre l'étape E31-2 du procédé décrit en relation avec la figure 3. Il est également adapté pour mettre également en oeuvre une étape (non représentée sur la figure 3) d'envoi d'un nouveau message d'interrogation AUTH-QUERYREP, consécutif à la réception par le lecteur de zéro ou plusieurs réponses d'étiquette au cours du créneau temporel précédent,
- un deuxième module qui, couplé à l'antenne 42 constitue un premier module de réception 45, agencé pour recevoir un message de réponse d'une, ou de plusieurs étiquettes de l'ensemble qui ont sélectionné le créneau temporel courant. Le message de réponse envoyé par une étiquette comprend une valeur fonction d'un desdits coupons d'authentification propres à l'étiquette, en tant que valeur aléatoire choisie par l'étiquette. Le premier module de réception 45 est adapté pour mettre en oeuvre l'étape E31-6 du procédé décrit en relation avec la figure 3,
- un module de vérification 46, agencé pour vérifier que les premiers moyens de réception 45 n'ont reçu qu'un message de réponse pendant le créneau temporel sélectionné. Le nombre de messages de réponse étant significatif du nombre d'étiquettes qui ont répondu au message d'interrogation, le module de vérification 46 vérifie donc combien d'étiquettes ont répondu au lecteur durant le créneau temporel sélectionné. Le module de vérification 46 est adapté pour mettre en oeuvre l'étape E31-7 de vérification, décrite en relation avec la figure 3,
- un troisième module qui, couplé à l'antenne 42 constitue un deuxième module d'envoi 47, agencé pour envoyer à une seule étiquette, sur commande des moyens de vérification 46, un message d'accusé de réception établi en fonction de la valeur aléatoire. Ainsi, le deuxième module d'envoi 47 n'est activé que si le module de vérification 46 a vérifié qu'une seule étiquette a répondu au message d'interrogation envoyé par le premier module d'envoi 44. Le deuxième module d'envoi 47 est adapté pour mettre en oeuvre l'étape E31-8 du procédé d'identification et d'authentification,
- un quatrième module qui, couplé à l'antenne 42 constitue un deuxième module de réception 48, agencé pour recevoir d'une étiquette, en l'espèce la seule étiquette qui a répondu, un message d'identification comprenant des informations d'identification. De fait, le deuxième module de réception ne reçoit le message d'identification qu'après que le deuxième module d'envoi 47 a envoyé un message d'accusé de réception. Ainsi, le deuxième module de réception 48 ne reçoit un message d'identification que lorsqu'une seule étiquette a répondu au lecteur. Le deuxième module de réception 48 est adapté pour mettre en oeuvre l'étape E31-11 de réception du procédé décrit en relation avec la figure 3.

Les modules communiquent via un bus de communication. Les modules 43, 44, 45, 46, 47 et 48 sont de préférence des modules logiciels comprenant des instructions logicielles pour faire exécuter les étapes du procédé d'identification et d'authentification selon l'invention.

L'invention concerne donc aussi :
- un programme d'ordinateur comportant des instructions pour la mise en oeuvre de celles des étapes du procédé d'identification et d'authentification d'une étiquette qui sont réalisées par le lecteur, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

Dans une variante de réalisation de l'invention, le lecteur R comprend des moyens de communication (non représentés) avec une entité de calcul adaptée pour demander et recevoir un coupon pour une authentification courante.

Dans une réalisation particulière de l'invention, non détaillée, les étiquettes sont des dispositifs actifs. Les étiquettes sont alors équipées d'une batterie leur permettant d'émettre des signaux. Ainsi, les étiquettes et le lecteur R peuvent interagir sur une distance plus importante que dans le cas où les étiquettes sont des dispositifs passifs qui reçoivent leur énergie du lecteur.

Une étiquette radio T selon une forme particulière de réalisation de l'invention va maintenant être décrite en relation avec la figure 5. L'étiquette T est adaptée pour dialoguer avec un lecteur radio (non représenté sur la figure 5) au cours d'une séquence d'identification et d'authentification conforme aux étapes du procédé décrites précédemment.

Dans l'exemple particulier décrit ici, l'étiquette T est un dispositif passif recevant son énergie du lecteur radio lors d'une interrogation par celui-ci. L'étiquette T comprend :
- une antenne 50 adaptée pour envoyer au lecteur et recevoir du lecteur,
- des moyens de stockage 51, tels qu'une mémoire, adaptés pour stocker une clé secrète s d'un couple de clés privée/publique GPS (s, V), une première clé de régénération k, une fonction pseudo-aléatoire PRF et des coupons d'authentification de l'étiquette xᵢ lorsqu'ils sont pré-calculés ;
- une puce de silicium 52 comprenant une pluralité de transistors adaptés pour constituer des portes logiques d'une logique câblée non programmable. La logique câblée définit :
   - des moyens de sélection 53, agencés pour sélectionner un créneau temporel parmi un ensemble de créneaux disponibles,
   - des premiers moyens qui, couplés à l'antenne 50, constituent des premiers moyens de réception 54, agencés pour recevoir du lecteur, durant le créneau temporel sélectionné par les moyens de sélection 53, un message d'interrogation,
   - des deuxièmes moyens, qui couplés à l'antenne 50 constituent des premiers moyens d'envoi 55, agencés pour envoyer au lecteur un message de réponse, comprenant une valeur fonction d'un desdits coupons d'authentification, en tant que valeur aléatoire choisie par l'étiquette.
   - des troisièmes moyens, qui couplés à l'antenne 50 constituent des deuxièmes moyens de réception 56, agencés pour recevoir du lecteur un message d'accusé de réception établi en fonction du coupon d'authentification,
   - des quatrièmes moyens qui, couplés à l'antenne 50 constituent des deuxièmes moyens d'envoi 57, agencés pour envoyer au lecteur un message d'identification comprenant des informations d'identification. Le message d'identification comprend également une réponse d'authentification y, calculée à partir du défi reçu du lecteur et de données propres à l'étiquette.

Les moyens de sélection 53 sont adaptés pour mettre en oeuvre l'étape E31-4 décrite en relation avec la figure 3. Les premiers moyens de réception 54 sont adaptés pour mettre en oeuvre l'étape E31-3 du procédé d'identification et d'authentification. Les premiers moyens d'envoi 55 sont adaptés pour mettre en oeuvre l'étape E31-5 décrite en relation avec la figure 3. Les deuxième moyens de réception 56 sont adaptés pour mettre en oeuvre l'étape E31-9 décrite en relation avec la figure 3. Les deuxièmes moyens d'envoi 57 sont adaptés pour mettre en oeuvre l'étape E31-10 du procédé d'identification et d'authentification décrit en relation avec la figure 3.

L'invention porte également sur un système d'identification et d'authentification comprenant un lecteur R tel que celui décrit en relation avec la figure 4 et au moins une étiquette telle que décrit en relation avec la figure 5. Le système est apte à mettre en oeuvre les étapes du procédé décrit en relation avec la figure 3.

## Revendications

1. Procédé d'identification et d'authentification d'une étiquette radio (Tⱼ) mis en oeuvre par un lecteur radio (R), ladite étiquette appartenant à un ensemble d'étiquettes à portée radio du lecteur et ayant sélectionné un créneau temporel parmi un ensemble de créneaux disponibles (2^{q}), le procédé comprenant une étape de :
- envoi (E31-2) par le lecteur, durant le créneau temporel sélectionné, d'un message d'interrogation,
- réception (E31-6) de l'étiquette ayant sélectionné le créneau temporel d'un message de réponse au message d'interrogation, ledit message de réponse comprenant une valeur aléatoire choisie par l'étiquette,
l'étiquette mémorisant des coupons d'authentification (xᵢ), la réponse de l'étiquette reçue par le lecteur durant le créneau temporel contient une valeur, fonction de l'un desdits coupons, en tant que valeur aléatoire choisie par l'étiquette.

2. Procédé selon la revendication 1, comprenant en outre une étape de :
- envoi (E31-8) par le lecteur à ladite étiquette d'un message d'accusé de réception établi en fonction de la valeur aléatoire, le message d'accusé de réception comprenant un défi (c) choisi par le lecteur, et
- réception (E31-11) en provenance de l'étiquette d'un message d'identification comprenant des informations d'identification.

3. Procédé selon la revendication 2, dans lequel le message d'identification comprend en outre une réponse d'authentification (y) calculée à partir du défi et d'un secret propre à l'étiquette, le procédé comprenant une étape de :
- vérification (E31-12) par le lecteur que la valeur aléatoire contenue dans le message de réponse reçu de l'étiquette est égale à une valeur calculée à partir de la réponse d'authentification et du défi, l'authentification de l'étiquette étant réussie lorsque la vérification est positive.

4. Procédé selon la revendication 2, dans lequel le message d'accusé de réception comprend une donnée ([xᵢ]₁₆, f(xᵢ)), fonction du coupon d'authentification.

5. Procédé selon la revendication 1, dans lequel le message de réponse de l'étiquette comprenant en outre un deuxième aléa (c'), l'accusé de réception envoyé par le lecteur est établi aussi en fonction du deuxième aléa.

6. Procédé d'identification et d'authentification d'une étiquette (Tⱼ) auprès d'un lecteur radio (R), l'étiquette étant à portée radio du lecteur, ladite étiquette ayant sélectionné un créneau temporel parmi un ensemble de créneaux disponibles (2^{q}), le procédé comprenant une étape de :
- réception (E31-3) du lecteur durant le créneau temporel sélectionné d'un message d'interrogation,
- envoi (E31-5) au lecteur d'un message de réponse au message d'interrogation, ledit message de réponse comprenant une valeur aléatoire choisie par l'étiquette,
l'étiquette mémorisant des coupons d'authentification (xᵢ), la réponse de l'étiquette envoyée au lecteur contient une valeur, fonction de l'un desdits coupons, en tant que valeur aléatoire choisie par l'étiquette.

7. procédé selon la revendication 6, comprenant en outre une étape de :
- réception (E31-9) du lecteur d'un message d'accusé de réception établi en fonction de la valeur aléatoire, le message d'accusé de réception comprenant un défi (c) choisi par le lecteur, et
- envoi (E31-10) au lecteur d'un message d'identification comprenant des informations d'identification.

8. Procédé selon la revendication 7, dans lequel le message d'identification envoyé au lecteur comprend en outre une réponse d'authentification (y) calculée à partir du défi et d'un secret propre à l'étiquette.

9. Lecteur adapté pour identifier et authentifier une étiquette radio (Tⱼ), ladite étiquette appartenant à un ensemble d'étiquettes à portée radio du lecteur et ayant sélectionné un créneau temporel parmi un ensemble de créneaux disponibles (2^{q}), l'étiquette mémorisant des coupons d'authentification (xᵢ), le lecteur comprenant :
- des premiers moyens d'envoi (44), agencés pour envoyer un message d'interrogation durant le créneau temporel sélectionné,
- des premiers moyens de réception (45), agencés pour recevoir de l'étiquette ayant sélectionné le créneau temporel un message de réponse au message d'interrogation, ledit message de réponse comprenant une valeur fonction d'un desdits coupons d'authentification en tant que valeur aléatoire choisie par l'étiquette,
- des moyens de vérification (46), agencés pour vérifier combien les premiers moyens de réception ont reçu de messages de réponse pendant le créneau temporel sélectionné.

10. Etiquette radio (Tⱼ) adaptée pour être identifiée et authentifiée par un lecteur radio (R), l'étiquette comprenant :
- des moyens (51) de mémorisation de coupons d'authentification,
- des moyens de sélection (53), agencés pour sélectionner un créneau temporel parmi un ensemble de créneaux disponibles,
- des premiers moyens de réception (54), agencés pour recevoir du lecteur, durant le créneau temporel sélectionné par les moyens de sélection, un message d'interrogation,
- des premiers moyens d'envoi (55), agencés pour envoyer au lecteur un message de réponse au message d'interrogation, comprenant un desdits coupons d'authentification en tant que valeur aléatoire choisie par l'étiquette.

11. Système d'authentification radio comprenant :
- un lecteur radio selon la revendication 9, et
- au moins une étiquette radio selon la revendication 10.

12. Programme d'ordinateur destiné à être installé dans une mémoire d'un lecteur radio, comprenant des instructions pour la mise en oeuvre des étapes du procédé d'identification et d'authentification d'une étiquette radio mis en oeuvre par un lecteur selon l'une des revendications 1 à 5 qui sont exécutées par le lecteur, lorsque le programme est exécuté par un processeur.

13. Support de données sur lequel est enregistré le programme d'ordinateur selon la revendication 12.

## Patentansprüche

1. Verfahren zur Identifikation und Authentifikation eines RFID-Tags (Tⱼ) durch ein RFID-Lesegerät (R), wobei das Tag zu einer Gesamtheit von Tags in Funkfrequenzreichweite des Lesegeräts gehört und ein Zeitfenster aus einer Gesamtheit verfügbarer Zeitfenster (2^{q}) gewählt hat, wobei das Verfahren einen Schritt des
- Sendens (E31-2) einer Abfragemeldung durch das Lesegerät während des gewählten Zeitfensters,
- Empfangs (E31-6) einer Antwortmeldung auf die Abfragemeldung vom Tag, das das Zeitfenster gewählt hat, wobei die Antwortmeldung einen vom Tag gewählten Zufallswert umfasst, umfasst
wobei das Tag Authentifikationscodes (xᵢ) speichert und die Antwort des Tags, die vom Lesegerät während des Zeitfensters empfangen wird, einen von einem der Codes abhängigen Wert als vom Tag gewählten Zufallswert enthält.

2. Verfahren nach Anspruch 1, außerdem einen Schritt des
- Sendens (E31-8) einer abhängig vom Zufallswert erzeugten Empfangsbestätigungsmeldung durch das Lesegerät an das Tag, wobei die Empfangsbestätigungsmeldung abhängig vom Zufallswert erstellt wird und die Empfangsbestätigungsmeldung eine Aufforderung (c) umfasst, die vom Lesegerät gewählt wird, und
- Empfangs (E31-11) einer Identifikationsmeldung mit Identifikationsinformationen vom Tag, umfassend.

3. Verfahren nach Anspruch 2, bei dem die Identifikationsmeldung außerdem eine Authentifikationsantwort (y) umfasst, die ausgehend von der Aufforderung und einem Tag-eigenen Geheimcode berechnet wird, wobei das Verfahren einen Schritt der
- Verifikation (E31-12) durch das Lesegerät, dass der Zufallswert, der in der vom Tag empfangenen Antwortmeldung enthalten ist, gleich einem Wert ist, der ausgehend von der Authentifikationsantwort und der Aufforderung berechnet wird, wobei die Authentifikation des Tags gelungen ist, wenn die Verifikation positiv ist, umfasst.

4. Verfahren nach Anspruch 2, bei dem die Empfangsbestätigungsmeldung vom Authentifikationscode abhängige Daten ([xᵢ]₁₆, f(xᵢ)) umfasst.

5. Verfahren nach Anspruch 1, bei dem die Antwortmeldung des Tags außerdem einen zweiten Zufall (c') umfasst, wobei die vom Lesegerät gesendete Empfangsbestätigung auch abhängig vom zweiten Zufall erstellt wird.

6. Verfahren zur Identifikation und Authentifikation eines Tags (Tⱼ) durch ein RFID-Lesegerät (R), wobei sich das Tag in Funkreichweite des Lesegeräts befindet und das Tag ein Zeitfenster aus verfügbaren Fenstern (2^{q}) gewählt hat, wobei das Verfahren einen Schritt des
- Empfangs (E31-3) einer Abfragemeldung vom Lesegerät während des gewählten Zeitfensters,
- Sendens (E31-5) einer Antwortmeldung auf die Abfragemeldung an das Lesegerät, wobei die Antwortmeldung einen vom Tag gewählten Zufallswert umfasst, umfasst
wobei das Tag Authentifikationscodes (xᵢ) speichert und die Antwort des Tags, die an das Lesegerät gesendet wird, einen von einem der Codes abhängigen Wert als vom Tag gewählten Zufallswert enthält.

7. Verfahren nach Anspruch 6, das außerdem einen Schritt des
- Empfangs (E31-9) einer Empfangsbestätigungsmeldung, die abhängig vom Zufallswert erstellt wird, vom Lesegerät, wobei die Empfangsbestätigungsmeldung eine vom Lesegerät gewählte Aufforderung (c) umfasst, und
- Sendens (E31-10) einer Identifikationsmeldung mit Identifikationsinformationen an das Lesegerät, umfasst.

8. Verfahren nach Anspruch 7, bei dem die an das Lesegerät gesendete Identifikationsmeldung außerdem eine Authentifikationsantwort (y) umfasst, die ausgehend von der Aufforderung und einem Tag-eigenen Geheimcode berechnet wird.

9. Lesegerät, geeignet zum Identifizieren und Authentifizieren eines RFID-Tags (Tⱼ), wobei das Tag zu einer Gesamtheit von Tags in Funkfrequenzreichweite des Lesegeräts gehört und ein Zeitfenster aus einer Gesamtheit verfügbarer Zeitfenster (2^{q}) gewählt hat, wobei das Tag Authentifizierungscodes (xᵢ) speichert und das Lesegerät Folgendes umfasst:
- erste Sendemittel (44), dafür eingerichtet, eine Abfragemeldung im gewählten Zeitfenster zu senden,
- erste Empfangsmittel (45), dafür eingerichtet, vom Tag, das das Zeitfenster gewählt hat, eine Antwortmeldung auf die Abfragemeldung zu empfangen, wobei die Antwortmeldung einen von einem der Authentifizierungscodes abhängigen Wert als vom Tag gewählten Zufallswert enthält,
- Verifikationsmittel (46), dafür eingerichtet, zu verifizieren, wie viele Antwortmeldungen die ersten Empfangsmittel im gewählten Zeitfenster empfangen haben.

10. RFID-Tag (dz), dafür geeignet, durch ein RFID-Lesegerät (R) identifiziert und authentifiziert zu werden, wobei das Tag Folgendes umfasst:
- Mittel (51) zum Speichern von Authentifizierungscodes,
- Auswahlmittel (53), dafür eingerichtet, ein Zeitfenster aus einer Gesamtheit von Zeitfenstern zu wählen,
- erste Empfangsmittel (54), dafür eingerichtet, in dem von den Auswahlmitteln gewählten Zeitfenster eine Abfragemeldung vom Lesegerät zu empfangen,
- erste Sendemittel (55), dafür eingerichtet, eine Antwortmeldung, umfassend einen der Authentifizierungscodes als vom Tag gewählten Zufallswert, auf die Abfragemeldung an das Lesegerät zu senden.

11. RFID-Authentifikationssystem, umfassend:
- ein RFID-Lesegerät nach Anspruch 9 und
- mindestens ein RFID-Tag nach Anspruch 10.

12. Computerprogramm, dafür vorgesehen, in einem Speicher eines RFID-Lesegeräts installiert zu werden, umfassend Anweisungen zur Durchführung der Schritte des Verfahrens zur Identifikation und Authentifikation eines RFID-Tags durch ein RFID-Lesegerät nach einem der Ansprüche 1 bis 5, die vom Lesegerät ausgeführt werden, wenn das Programm von einem Prozessor ausgeführt wird.

13. Datenträger, auf dem das Computerprogramm nach Anspruch 12 gespeichert ist.

## Claims

1. Method for identifying and authenticating a RFID tag (Tⱼ) implemented by a RFID reader (R), said tag belonging to a set of tags within radio range of the reader and having selected a time slot out of a set of available slots (2^{q}), the method comprising a step of:
- sending (E31-2), by the reader, during the selected time slot, of an interrogation message,
- reception (E31-6), from the tag having selected the time slot, of a response message to the interrogation message, said response message comprising a random value chosen by the tag,
the tag storing authentication coupons (xᵢ), the response from the tag received by the reader during the time slot contains a value, that is a function of one of said coupons, as random value chosen by the tag.

2. Method according to Claim 1, further comprising a step of:
- sending (E31-8), by the reader to said tag, of a reception acknowledgement message established as a function of the random value, the reception acknowledgement message comprising a challenge (c) chosen by the reader, and
- reception (E31-11) from the tag, of an identification message comprising identification information.

3. Method according to Claim 2, in which the identification message further comprises an authentication response (y) computed from the challenge and from a secret specific to the tag, the method comprising a step of:
- checking (E31-12) by the reader that the random value contained in the response message received from the tag is equal to a value computed from the authentication response and from the challenge, the authentication of the tag being successful when the check is positive.

4. Method according to Claim 2, in which the reception acknowledgement message comprises a datum ([xᵢ]₁₆, f(xᵢ)), that is a function of the authentication coupon.

5. Method according to Claim 1, in which, the response message from the tag further comprising a second random value (c'), the reception acknowledgement sent by the reader is established also as a function of said second random value.

6. Method for identifying and authenticating a tag (Tⱼ) with a RFID reader (R) the tag being within radio range of the reader, said tag having selected a time slot out of a set of available slots (2^{q}), the method comprising a step of:
- reception (E31-3), from the reader during the selected time slot, of an interrogation message,
- sending (E31-5), to the reader, of a response message to the interrogation message, said response message comprising a random value chosen by the tag,
the tag storing authentication coupons (xᵢ), the response from the tag sent to the reader contains a value, that is a function of one of said coupons, as random value chosen by the tag.

7. Method according to Claim 6, further comprising a step of:
- reception (E31-9), from the reader, of a reception acknowledgement message established as a function of the random value, the reception acknowledgement message comprising a challenge (c) chosen by the reader, and
- sending (E31-10), to the reader, of an identification message comprising identification information.

8. Method according to Claim 7, in which the identification message sent to the reader further comprises an authentication response (y) computed from the challenge and from a secret specific to the tag.

9. Reader suitable for identifying and authenticating a RFID tag (Tⱼ), said tag belonging to a set of tags within radio range of the reader and having selected a time slot out of a set of available slots (2^{q}), the tag storing authentication coupons (xᵢ), the reader comprising:
- first sending means (44), arranged to send an interrogation message during the selected time slot,
- first reception means (45), arranged to receive, from the tag having selected the time slot, a response message to the interrogation message, said response message comprising a value that is a function of one of said authentication coupons as random value chosen by the tag,
- checking means (46), arranged to check how many the first reception means have received response messages during the selected time slot.

10. RFID tag (Tⱼ) suitable for being identified and authenticated by a RFID reader (R), the tag comprising:
- means (51) for storing authentication coupons,
- selection means (53), arranged to select a time slot out of a set of available slots,
- first reception means (54), arranged to receive, from the reader, during the time slot selected by the selection means, an interrogation message,
- first sending means (55), arranged to send, to the reader, a response message to the interrogation message, comprising one of said authentication coupons as random value chosen by the tag.

11. RFID authentication system comprising:
- an RFID reader according to Claim 9, and
- at least one RFID tag according to Claim 10.

12. Computer program intended to be installed in a memory of an RFID reader, comprising instructions for the implementation of the steps of the method for identifying and authenticating an RFID tag implemented by a reader according to one of Claims 1 to 5 which are executed by the reader, when the program is run by a processor.

13. Data medium on which is stored the computer program according to Claim 12.
